# FASCICULE DE BREVET EUROPEEN

(11) **EP 1 580 053 B1**
(45) Date de publication et mention de la délivrance du brevet: **11.03.2009**
(21) Numéro de dépôt: 05290674.0
(22) Date de dépôt: 25.03.2005
(51) Int. Cl.: B60H 1/34

(54) **Aérateur amélioré pour habitacle de véhicule automobile, et planche de bord de véhicule dotée d'un tel aérateur**
Verbesserte Luftausströmer für Innenräume von Kraftfahrzeugen und Armaturenbrett versehen mit so einem Luftausströmer
Improved air outlet for passenger compartments of automotive vehicles and dashboard equipped with such an outlet.

(30) Priorité: 26.03.2004 FR 0403168
(43) Date de publication de la demande: 28.09.2005
(73) Titulaire: Faurecia Interieur Industrie, 92000 Nanterre (FR)
(72) Inventeur: Leserre, Dominique, 77450 Montry (FR)
(74) Mandataire: Domenego, Bertrand

(56) Documents cités:
- EP-A- 1 249 359
- DE-A- 10 054 555
- DE-A- 10 063 189
- US-A- 4 938 122

## Description

La présente invention concerne un aérateur pour habitacle de véhicule automobile, conforme au préambule de la revendication 1.

On connaît de nombreux aérateurs de ce type dans l'état de la technique, notamment des aérateurs de planche de bord, comme décrit par EP-A-1 249 359.

Il n'est pas rare que de tels aérateurs soient conçus et implantés dans une planche de bord, de telle façon que la direction nominale d'écoulement d'air soit fortement inclinée par rapport à la direction normale à la paroi de planche de bord sur laquelle débouche l'aérateur. Dans un tel cas, une inclinaison supplémentaire des ailettes orientables, même relativement faible, suffit à orienter le flux d'air sortant dans une direction très faiblement inclinée par rapport au plan de la paroi, en périphérie de l'ouverture. A partir de ce seuil d'inclinaison des ailettes, il peut se produire une adhérence des filets d'air sur la paroi, en sortie de l'aérateur, selon l'effet dit « Coanda ».

Ainsi, à certains angles d'inclinaison des ailettes, une partie au moins de l'air diffusé s'écoule le long de la paroi de planche de bord en étant détourné de sa cible, de sorte que l'aérateur perd une partie de son efficacité.

L'invention a pour objet de remédier à cet inconvénient, et de proposer un aérateur permettant de limiter les pertes d'efficacité dues à l'effet Coanda.

A cette fin, l'invention porte sur un aérateur conforme à la revendication 1.

De préférence, un aérateur conforme à l'invention pourra présenter une ou plusieurs des caractéristiques additionnelles suivantes :
- l'aérateur comporte un mécanisme de transmission reliant l'ailette directrice au déflecteur, ledit mécanisme comprenant une came de renvoi montée pivotante par rapport au corps selon un axe parallèle à celui de l'ailette directrice, ladite came de renvoi et, de façon complémentaire, l'ailette directrice d'une part et le déflecteur d'autre part, étant pourvu(e)s de chemins de came et de suiveurs de came respectifs en engagement mutuel ;
- les chemins de came sont prévus de telle sorte qu'une rotation de l'ailette directrice sur une première plage angulaire ne modifie pas la position du déflecteur, et qu'une rotation de l'ailette directrice sur une deuxième plage angulaire adjacente à la première entraîne un déplacement en extraction ou rétraction du déflecteur ;
- sur la deuxième plage angulaire, l'extraction est d'autant plus importante que l'angle d'inclinaison de l'ailette directrice par rapport à la direction nominale est important en valeur absolue ;
- le chemin de came associé à l'ailette directrice comporte essentiellement deux portions formant ensemble un coude ;
- le mécanisme de transmission comprend des moyens de rappel élastique sollicitant la came de renvoi vers une position neutre, telle que le déflecteur est maintenu en position escamotée ;
- le déflecteur a un profil galbé qui est, lorsque le déflecteur fait saillie du corps, divergent par rapport à la direction nominale d'écoulement d'air ; et
- l'aérateur comprend un organe de manoeuvre rotatif, solidaire de l'ailette directrice.

L'invention vise également une planche de bord de véhicule automobile comportant un aérateur tel que décrit précédemment.

Un mode de réalisation de l'invention va maintenant être décrit plus en détail en référence aux dessins annexés, sur lesquels :
- la Figure 1 est une vue en coupe, dans un plan vertical axial, d'un aérateur conforme à l'invention, intégré dans une paroi de planche de bord, les ailettes étant orientées selon la direction nominale d'écoulement d'air ;
- la Figure 2 est une vue de détail de l'aérateur de la Figure 1, en coupe selon la ligne 2-2, montrant plus particulièrement la liaison du déflecteur au corps d'aérateur et au mécanisme de transmission ;
- la Figure 3 est une vue analogue à la Figure 1, les ailettes étant dans leur position extrême inclinée vers le haut ; et
- la Figure 4 est une vue analogue à la Figure 1, les ailettes étant dans leur position extrême inclinée vers le bas.

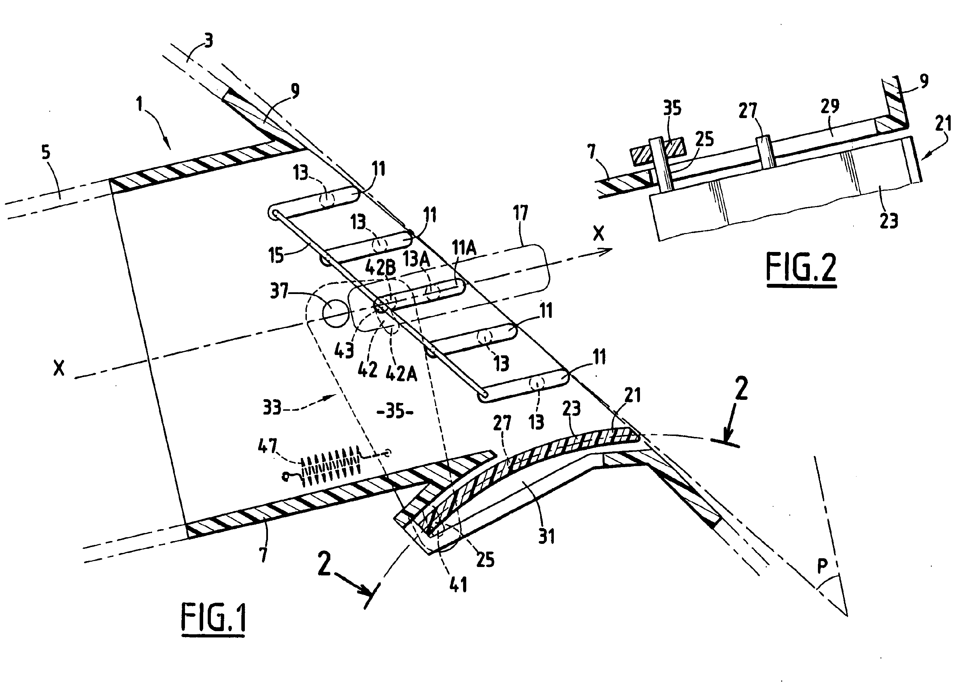

Sur la Figure 1, on a représenté, en coupe, un aérateur 1, intégré dans une paroi 3 de planche de bord (représentée en traits mixtes) d'un habitacle de véhicule automobile.

Dans la partie de planche de bord, dont seule la paroi 3 formant façade est représentée, est intégré un conduit d'aération 5 (schématisé en traits mixtes), qui débouche dans l'habitacle par l'intermédiaire de l'aérateur 1. Ce dernier est destiné à canaliser et à orienter le flux d'air en sortie du conduit d'aération 5 vers l'habitacle.

Naturellement, l'intérieur de l'habitacle du véhicule est situé vers la droite de la Figure 1, l'avant du véhicule étant situé à gauche. La paroi de planche de bord 3 (ou façade) est dotée d'une ouverture d'aération, et l'aérateur 1 comprend un corps 7 formant conduit d'air, raccordé au conduit 5, et fixé sur la façade 3 de façon à déboucher dans l'ouverture de cette dernière.

Le corps 7 a une forme générale tubulaire ayant un axe X-X de conduit, qui définit une direction nominale d'écoulement d'air.

Dans toute la description qui va suivre, les termes « amont » et « aval » s'entendront par rapport à la direction de circulation de l'air au travers de l'aérateur 1, en fonctionnement normal du système de ventilation auquel appartient ce dernier.

Ainsi, sur la Figure 1, la direction amont est orientée de la droite vers la gauche, tandis que la direction aval est tournée vers la droite, c'est-à-dire du côté de l'habitacle.

Comme cela est visible sur la Figure 1, le corps 7 de l'aérateur est formé, du côté de son extrémité aval, avec une collerette 9 périphérique par rapport à l'ouverture de sortie du corps 7. La collerette 9 est engagée et ajustée dans l'ouverture de la façade 3, de façon à assurer une continuité de surface avec cette dernière, et de façon que l'ouverture de sortie du corps 7 coïncide avec l'ouverture formée dans la paroi 3.

On notera que dans l'exemple représenté, la paroi de planche de bord 3 et la collerette 9 définissent ensemble, dans la région de l'aérateur 1, une surface sensiblement plane, en réalité très légèrement galbée, qui présente un plan moyen P. La direction nominale X-X de l'aérateur 1 est sensiblement inclinée par rapport à la direction normale au plan moyen P.

L'aérateur 1 comprend en outre une série d'ailettes parallèles 11, 11A, montées pivotantes autour d'axes respectifs parallèles entre eux 13, 13A à l'intérieur du conduit formé par le corps 7, du côté de sa sortie. Les ailettes 11, 11A sont ainsi prévues pour canaliser et orienter le flux d'air de façon réglable, en sortie de l'aérateur.

Les axes 13, 13A respectifs des ailettes 11, 11A sont transversaux par rapport à la direction nominale d'écoulement d'air X-X.

L'aérateur 1 comprend de plus une barrette rigide 15 reliant entre elle les ailettes 11, 11A avec possibilité de pivotement des ailettes par rapport à cette barrette, du côté de leur bord amont. Ainsi, toutes les ailettes 11, 11A sont liées entre elles en rotation et sont toutes inclinées du même angle par rapport à la direction nominale d'écoulement X-X.

L'aérateur 1 possède en outre un organe de manoeuvre 17 lié rigidement à l'une 11A des ailettes. Cet organe 17 est ainsi monté pivotant par rapport au corps 7, et fait saillie de ce dernier vers l'intérieur de l'habitacle pour pouvoir être saisi et déplacé par un utilisateur. L'ailette 11A solidaire de l'organe de manoeuvre 17 est ici appelée « ailette directrice », puisque sa position angulaire autour de son axe de rotation 13A, liée à la position de l'organe de manoeuvre 17, détermine la position des autres ailettes 11 autour de leur axe 13 respectif, par l'intermédiaire de la barrette rigide 15.

Dans la configuration représentée sur la Figure 1, les ailettes 11, 11A sont parallèles à la direction nominale X-X, de sorte qu'elles ne modifient par la direction générale d'écoulement de l'air vis-à-vis de la direction donnée par le corps 7 seul.

L'aérateur 1 comprend en outre un déflecteur 21 formé essentiellement d'une plaque galbée 23, dont la convexité est tournée vers l'axe X-X, c'est-à-dire vers l'intérieur du corps 7 d'aérateur.

Comme cela est visible sur la Figure 1, le profil galbé du déflecteur 21 est coplanaire au profil des ailettes 11.

On verra mieux sur la Figure 2, que le déflecteur 21 est doté de deux tétons 25, 27 qui font saillie transversalement, c'est-à-dire parallèlement aux axes 13, 13A de rotation des ailettes, de la plaque galbée 23.

Ces tétons 25, 27 sont engagés dans une lumière oblongue 29 formée latéralement dans le corps 7, de sorte que le déflecteur 21 peut se déplacer par rapport au corps 7 en étant guidé par les tétons 25, 27 dans la lumière 29. La lumière 29 a une forme identique au profil de la plaque 23. C'est ainsi que le déflecteur 21 peut se déplacer par rapport au corps en suivant son propre profil.

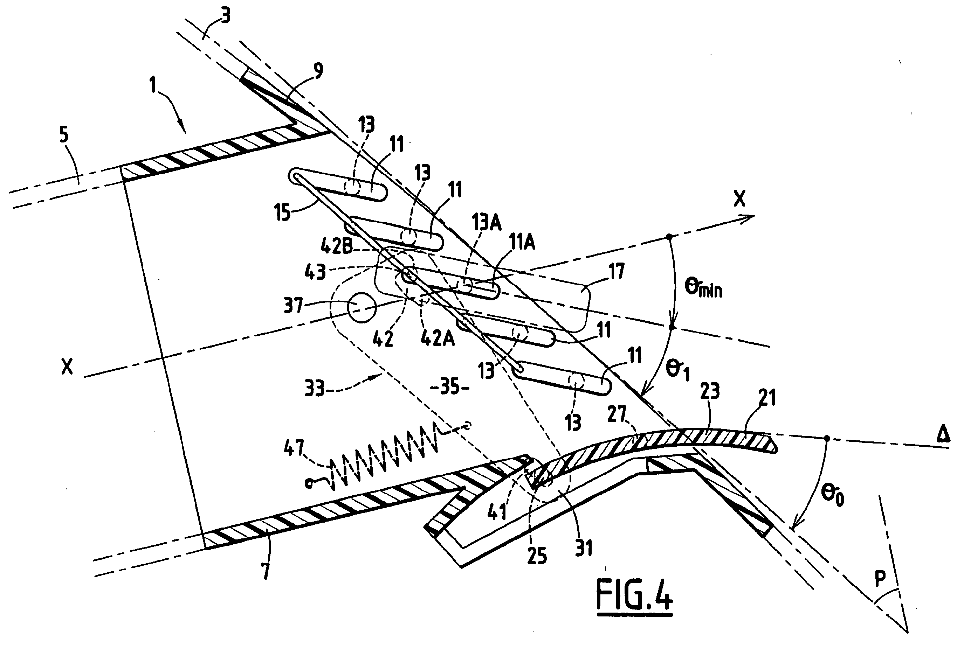

Comme on le comprendra en se référant par exemple aux Figures 1 et 4, le déflecteur 21 est déplaçable par rapport au corps 7 entre une position escamotée dans ce dernier (Figure 1) et une position extraite (Figure 4), dans laquelle il prolonge, au-delà de la sortie du corps 7, une partie du conduit formé par ce corps.

En se référant à nouveau principalement à la Figure 1, on peut observer que le corps 7 est muni d'un dégagement 31, formé dans ses parois internes, et à l'intérieur duquel s'étend partiellement le déflecteur 21. Dans la position escamotée du déflecteur 21, une partie amont de ce dernier s'étend en effet dans le dégagement 31, tandis que la partie aval restante, également escamotée dans le corps 7, s'étend dans la continuité de la paroi interne du corps située en amont du dégagement 31.

Le déplacement du déflecteur 21 est lié au déplacement angulaire de l'ailette directrice 11A, par le biais d'un mécanisme de transmission 33 qui relie cette ailette directrice 11A au déflecteur 21.

Le mécanisme de transmission 33 comprend essentiellement une came de renvoi 35 montée pivotante sur le corps 7, à l'extérieur de ce dernier, par l'intermédiaire d'un tourillon 37 qui matérialise son axe de rotation. Cet axe est parallèle aux axes de rotation 13 , 13A des ailettes.

La came de renvoi 35 est dotée de deux chemins de came 41, 42, dans lesquels sont engagés respectivement le téton 25 formant suiveur de came, et un pion 43 formant suiveur de came solidaire de l'ailette 11A (et de l'organe de manoeuvre 17).

Le premier chemin de came 41 a une forme allongée sensiblement selon une direction radiale par rapport à l'axe 37, tandis que le deuxième chemin de came 42 est constitué essentiellement de deux portions 42A, 42B formant un coude.

La première portion 42A a une courbure sensiblement constante centrée sur l'axe 13A de l'ailette directrice. De ce fait, une rotation de l'ailette directrice 11A sur une première plage angulaire, correspondant au déplacement du pion 43 d'une extrémité à l'autre de cette première portion 42A, n'entraîne aucun pivotement de la came de renvoi 35 autour de son axe 37.

La deuxième portion 42B, qui est dans l'exemple représenté de plus petite dimension que la première portion 42A, s'étend essentiellement de façon radiale par rapport à l'axe 37 de rotation de la came de renvoi 35. Ainsi, une rotation de l'ailette directrice 11A sur une deuxième plage angulaire adjacente à la première, correspondant au déplacement du pion 43 d'une extrémité à l'autre de cette deuxième portion 42B, entraîne un pivotement de la came de renvoi 35. Il va de soi au vu de la Figure 1 qu'un tel pivotement de la came 35 entraîne un déplacement du déflecteur 21 vers l'extérieur du corps 7, par action de la came 35 sur le téton 25.

Le mécanisme de transmission 33 comprend en outre un organe élastique de rappel sous la forme, dans l'exemple représenté, d'un ressort axial 47 reliant la came de renvoi 35 à une paroi du corps 7. Le ressort 47 est agencé de façon à rappeler la came de renvoi 35 dans une position neutre, dans laquelle le pion 43 se situe à la jonction des deux portions de came 42A, 42B. Dans cette position neutre, le déflecteur 21 est en position rétractée, partiellement à l'intérieur du dégagement 31, tel que représenté sur la Figure 1. Tout pivotement de la came de renvoi 35 se fait donc à l'encontre de l'effet du ressort 47.

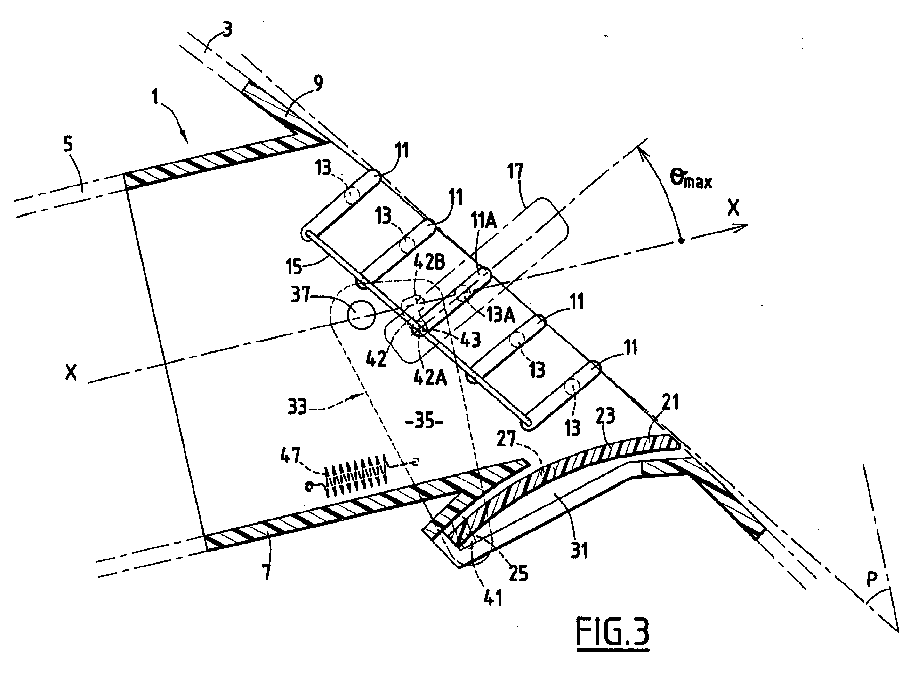

On se réfère à présent à la Figure 3, sur laquelle on a représenté l'aérateur 1 avec ses ailettes 11 en position extrême haute, c'est-à-dire orientées selon un angle maximum θₘₐₓ positif, par rapport à l'axe nominal X-X.

Cette position correspond à la venue du pion 43 en fond de la portion 42A de came, suite à une manoeuvre en rotation de l'angle θₘₐₓ de l'organe 17, à partir de la position représentée sur la Figure 1.

Il est apparent sur cette Figure 3 que, durant le déplacement de l'ailette directrice 11A, et solidairement du pion 43 dans la came 42, la came de renvoi 35 reste dans sa position initiale, de sorte que le déflecteur 21 reste également dans sa position initiale escamotée dans le corps 7.

On se réfère à présent à la Figure 4, sur laquelle on a représenté l'aérateur 1 dans sa configuration correspondant à la position extrême basse des ailettes 11, 11A.

Dans cette position, qui correspond à la venue du pion 43 en fond de la portion 42B de came, les ailette 11, 11A sont inclinées d'un angle minimum θₘᵢₙ négatif par rapport à l'axe X-X.

Dans cette configuration, le déflecteur 21 se trouve dans une position partiellement extraite du corps 7, qui sera dite « position extraite ». Le déflecteur 21 prolonge alors au-delà de la sortie du corps 7 le conduit défini par le corps.

On notera que le profil galbé du déflecteur 21 définit une partie de conduit divergente par rapport à la direction d'écoulement nominal X-X.

On a représenté sur la Figure 4 la tangente Δ à la surface intérieure du déflecteur 21, à l'extrémité aval de ce dernier. Cette tangente Δ forme avec le plan P un angle θ₀, négatif, de valeur absolue prévue pour être suffisamment grande pour éviter l'effet Coanda en sortie de l'aérateur, c'est-à-dire en aval du déflecteur.

On comprend qu'en valeur absolue, l'angle θ₀ est supérieur à l'angle θ₁ formé entre les ailettes (en particulier l'ailette la plus proche du déflecteur), et le plan P). L'extraction du déflecteur 21 permet donc de limiter la rapprochement angulaire des filets d'air vis-à-vis de la paroi 3, en sortie de l'aérateur 1, lorsque les ailettes sont inclinées vers le bas de façon importante.

On comprend également qu'à partir de la position représentée sur la Figure 1, un actionnement de l'organe de manoeuvre 17 dans le sens des angles négatifs par rapport à la direction nominale, entraîne le déplacement du pion 43 dans la portion de came 42B correspondante, et de ce fait le pivotement progressif de la came de renvoi 35. Le déplacement du déflecteur 21 dans le sens de l'extraction, et de la même façon dans le sens de la rétraction, est ainsi progressif et continu avec la rotation de l'organe de manoeuvre.

En d'autres termes, plus les ailettes s'écartent de la direction nominale en s'inclinant vers la paroi, plus le déflecteur est extrait du corps, et ce à partir d'une valeur prédéterminée d'inclinaison des ailettes.

Il peut être vu sur la Figure 4, que le ressort 47 parvient alors dans une forme étirée, et sollicite la came de renvoi 35 dans sa position neutre explicitée précédemment, qui correspond à la configuration illustrée à la Figure 1. De ce fait, le déflecteur 21 est également sollicité vers sa position rétractée et les ailettes sont sollicitées vers leur position d'orientation nominale. Bien entendu, on pourra prévoir des crans d'arrêt pour l'organe de manoeuvre 17, permettant de maintenir ce dernier dans des positions stables à des angles d'inclinaison négatifs par rapport à l'axe X-X.

Naturellement, plutôt que de lier la position du déflecteur à la position angulaire de l'ailette directrice, il pourrait être envisagé de lier la position du déflecteur à la position angulaire de l'ailette la plus proche du déflecteur. Cela vaut notamment pour des aérateurs dont les ailettes peuvent prendre des inclinaisons différentes les unes des autres, pour fonctionner par exemple en diffuseur.

L'invention qui vient d'être décrite permet de conserver l'efficacité d'un aérateur à un niveau optimal, pour des inclinaisons des ailettes élevées vis-à-vis de la direction nominale, et faibles vis-à-vis de la paroi, et ce par des moyens mécaniques simples, fiables, et peu coûteux.

## Revendications

1. Aérateur pour habitacle de véhicule automobile, prévu pour déboucher dans l'ouverture d'une paroi, comprenant
- un corps (7) formant conduit d'air qui présente une sortie prévue pour coïncider avec ladite ouverture, ledit conduit définissant une direction nominale (X-X) d'écoulement d'air,
- une pluralité d'ailettes (11, 11A) orientables, montées pivotantes à l'intérieur dudit conduit (7), et
- un déflecteur (21) agencé pour pouvoir faire saillie au moins partiellement du corps (7), de façon à prolonger au-delà de la sortie une partie du conduit, **caractérisé en ce que** le déflecteur (21) est déplaçable entre une position escamotée dans le corps (7) et une position extraite, dans laquelle il prolonge au-delà de la sortie une partie du conduit, et **en ce que** la position dudit déflecteur (21) est liée à la position angulaire d'au moins une ailette directrice (11A) parmi lesdites ailettes, de telle sorte à empêcher l'air d'adhérer à la paroi (3) en sortie de l'aérateur (1), lorsque ladite ailette directrice (11A) est inclinée par rapport à la direction nominale (X-X) d'un angle dépassant une valeur prédéterminée.

2. Aérateur suivant la revendication 1, **caractérisé en ce qu'**il comporte un mécanisme de transmission (33) reliant l'ailette directrice (11A) au déflecteur (21), ledit mécanisme comprenant une came de renvoi (35) montée pivotante par rapport au corps (7) selon un axe (37) parallèle à celui (13A) de l'ailette directrice (11A), ladite came de renvoi (35) et, de façon complémentaire, l'ailette directrice (11A) d'une part et le déflecteur (21) d'autre part, étant pourvu(e)s de chemins de came (41, 42) et de suiveurs de came (25, 43) respectifs en engagement mutuel.

3. Aérateur suivant la revendication 2, **caractérisé en ce que** les chemins de came (41, 42) sont prévus de telle sorte qu'une rotation de l'ailette directrice (11A) sur une première plage angulaire ne modifie pas la position du déflecteur (21), et qu'une rotation de l'ailette directrice (11A) sur une deuxième plage angulaire adjacente à la première entraîne un déplacement en extraction ou rétraction du déflecteur (21).

4. Aérateur suivant la revendication 3, **caractérisé en ce que** sur la deuxième plage angulaire, l'extraction est d'autant plus importante que l'angle d'inclinaison de l'ailette directrice (11A) par rapport à la direction nominale (X-X) est important en valeur absolue.

5. Aérateur suivant la revendication 3 ou 4, **caractérisé en ce que** le chemin de came (42) associé à l'ailette directrice (11A) comporte essentiellement deux portions (42A, 42B) formant ensemble un coude.

6. Aérateur suivant l'une quelconque des revendications 2 à 5, **caractérisé en ce que** le mécanisme de transmission (33) comprend des moyens (47) de rappel élastique sollicitant la came de renvoi (35) vers une position neutre, telle que le déflecteur (21) est maintenu en position escamotée.

7. Aérateur suivant l'une quelconque des revendications 1 à 6, **caractérisé en ce que** le déflecteur (21) a un profil galbé qui est, lorsque le déflecteur fait saillie du corps (7), divergent par rapport à la direction nominale (X-X) d'écoulement d'air.

8. Aérateur suivant l'une quelconque des revendications 1 à 7, **caractérisé en ce qu'**il comprend un organe de manoeuvre (17) rotatif, solidaire de l'ailette directrice (11A).

9. Planche de bord de véhicule automobile comprenant un aérateur selon l'une quelconque des revendications 1 à 8.

## Claims

1. Ventilator for a motor vehicle passenger compartment, provided for delivering its flow in the opening of a wall, comprising
- a body (7) forming an air duct which has an outlet provided for meeting said opening, said duct defining an air flow nominal direction (X-X),
- a plurality of swivelling vanes (11 and 11A), mounted so as to pivot inside said duct (7) and
- a deflector (21), arranged to be capable of protruding at least partially from the body (7), so as to extend part of the duct beyond the outlet, **characterized in that** the deflector (21) is movable between a retracted position in the body (7) and a drawn out position, in which it extends part of the duct beyond the outlet and **in that** the position of said deflector (21) is linked to the angular position of at least one guide vane (11A) among said vanes, so as to prevent the air from adhering to the wall (3) at the outlet from the ventilator (1), when said guide vane (11A) is inclined in relation to the nominal direction (X-X) by an angle exceeding a predetermined value.

2. Ventilator according to claim 1, **characterized in that** it comprises a transmission mechanism (33) connecting the guide vane (11A) to the deflector (21), said mechanism comprising a return cam (35), mounted so as to pivot with respect to the body (7) in accordance with an axis (37) parallel with that (13A) of the guide vane (11A), said return cam (35) and, in a complementary manner, the guide vane (11A) on one hand and the deflector (21) on the other hand, being provided with cam grooves (41, 42) and their respective cam followers (25, 43), engaged with each other.

3. Ventilator according to claim 2, **characterized in that** the cam grooves (41, 42) are provided in such a way that a rotation of the guide vane (11A) in a first angle range does not alter the position of the deflector (21) and that a rotation of the guide vane (11A) in a second angle range, adjacent to the first one, brings about a movement of drawing out or retraction of the deflector (21).

4. Ventilator according to claim 3, **characterized in that,** in the second angle range, the drawing out is greater, the larger the angle of inclination of the guide vane (11A) is in relation to the nominal direction (X-X), in absolute value.

5. Ventilator according to claim 3 or 4, **characterized in that** the cam groove (42) associated with the guide vane (11A) essentially comprises two portions (42A, 42B) forming a bend together.

6. Ventilator according to any of claims 2 to 5, **characterized in that** the transmission mechanism (33) comprises elastic return means (47) pulling the return cam (35) towards a neutral position, such that the deflector (21) is held in the retracted position.

7. Ventilator according to any of claims 1 to 6, **characterized in that** the deflector (21) has a curved profile which, when the deflector protrudes from the body (7), is divergent with respect to the nominal direction (X-X) of air flow.

8. Ventilator according to any of claims 1 to 7, **characterized in that** it comprises a rotational operating element (17), secured to the guide vane (11A).

9. Motor vehicle dashboard comprising a ventilator according to any of claims 1 to 8.

## Patentansprüche

1. Belüfter für den Innenraum eine Kraftfahrzeuges, der dazu bestimmt ist, in die Öffnung einer Wand zu münden, umfassend :
- einen Körper (7), der eine Luftleitung bildet, die einen Ausgang vorsieht, um mit dieser Öffnung zusammenzufallen, wobei diese Leitung eine Nennrichtung (X-X) der Luftströmung definiert,
- eine Vielzahl von orientierbaren Lamellen (11, 11A), die schwenkbar im Innern dieser Leitung (7) montiert sind, und
- einen Deflektor (21), der so angeordnet ist, dass er mindestens teilweise vom Körper (7) hervorragen kann, um einen Teil der Leitung über den Ausgang hinaus zu verlängern,
**dadurch gekennzeichnet, dass** der Deflektor (21) zwischen einer eingefahrenen Position im Körper (7) und einer herausgefahrenen Position bewegbar ist, in der er einen Teil der Leitung über den Ausgang hinaus verlängert, und dass die Position dieses Deflektors (21) mit der Winkelposition von mindestens einer Richtlamelle (11A) unter diesen Lamellen verbunden ist, um zu verhindern, dass die Luft an der Wand (3) am Ausgang des Belüfters (1) haftet, wenn diese Richtlamelle (11A) in Bezug auf die Nennrichtung (X-X) unter einem Winkel geneigt ist, der einen vorbestimmten Wert übersteigt.

2. Belüfter nach Patentanspruch 1, **dadurch gekennzeichnet, dass** er einen Übertragungsmechanismus (33) umfasst, der die Richtlamelle (11A) mit dem Deflektor (21) verbindet, wobei dieser Mechanismus eine Rückstellnocke (35) umfasst, die schwenkbar in Bezug auf den Körper (7) um eine Achse (37), die parallel zu der (13A) der Richtlamelle (11A) ist, montiert ist, wobei diese Rückstellnocke (35) und auf komplementäre Weise einerseits die Richtlamelle (11A) und andererseits der Deflektor (21) jeweils mit in gegenseitigem Eingriff befindlichen Nockenwegen (41, 42) und Mitnehmernocken (25, 43) versehen sind.

3. Belüfter nach Patentanspruch 2, **dadurch gekennzeichnet, dass** die Nockenwege (41, 42) auf solch eine Art vorgesehen sind, dass eine Rotation der Richtlamelle (11A) über einen ersten Winkelbereich nicht die Position des Deflektors (21) modifiziert, und dass eine Rotation der Richtlamelle (11A) über einen zweiten an den ersten Winkelbereich angrenzenden Winkelbereich eine Ausfahr - oder Einfahrbewegung des Deflektors (21) hervorruft.

4. Belüfter nach Patentanspruch 3, **dadurch gekennzeichnet, dass** über den zweiten Winkelbereich das Ausfahren um so größer ist, je größer im Absolutwert der Neigungswinkel der Richtlamelle (11A) in Bezug auf die Nennrichtung (X-X) ist.

5. Belüfter nach Patentanspruch 3 oder 4, **dadurch gekennzeichnet, dass** der der Richtlamelle (11A) zugeordnete Nockenweg im Wesentlichen zwei Abschnitte (42A, 42B) umfasst, die zusammen ein Knie bilden.

6. Belüfter nach irgendeinem der Patentansprüche 2 bis 5, **dadurch gekennzeichnet, dass** der Übertragungsmechanismus (33) elastische Rückstellmittel (47) umfasst, die die Rückstellnocke (35) in eine neutrale Position bringen, so dass der Deflektor (21) in einer eingefahrenen Position gehalten bleibt.

7. Belüfter nach irgendeinem der Patentansprüche 1 bis 6, **dadurch gekennzeichnet, dass** der Deflektor (21) ein gerundetes Profil hat, das, wenn der Deflektor vom Körper (7) absteht, divergent in Bezug auf die Nennrichtung (X-X) der Luftströmung ist.

8. Belüfter nach irgendeinem der Patentansprüche 1 bis 7, **dadurch gekennzeichnet, dass** er ein mit der Richtlamelle (11A) einstückiges Drehbetätigungsorgan (17) umfasst.

9. Kraftfahrzeugarmaturenbrett umfassend einen Belüfter nach irgendeinem der Patentansprüche 1 bis 8.
